# DEMANDE DE BREVET EUROPEEN

(11) **EP 4 563 394 A1**
(43) Date de publication de la demande: **04.06.2025**
(21) Numéro de dépôt: 24215534.9
(22) Date de dépôt: 26.11.2024
(51) Int. Cl.: B60L 5/39, B60L 5/42, B60L 53/30

(54) **SYSTEME DE RECHARGE ELECTRIQUE AU SOL ET PROCEDE DE CONTRÔLE DUDIT SYSTEME DE RECHARGE**

(30) Priorité: 27.11.2023 FR 2313135
(71) Demandeur: Lohr Industrie, 67980 Hangenbieten (FR)
(72) Inventeur: LEONHART, Pierre, 67400 ILLKIRCH (FR); VERDIER, Laurent, 67114 ESCHAU (FR)
(74) Mandataire: Cabinet Laurent & Charras

(57) **Abrégé**

L'invention concerne un système de recharge d'un véhicule (1) guidé à traction électrique, comprenant une unité de stockage (2) d'énergie électrique rechargeable, au moins un patin collecteur (P+) de polarité positive et au moins un patin collecteur de polarité négative (P-), déplaçables entre une position relevée et un position abaissée en contact avec des éléments conducteurs (R+ et R-) correspondants d'une station de recharge (SR) au sol fournissant une tension et un courant de recharge continus, lesdits patins collecteurs (P+, P-) étant reliés à l'unité de stockage (2) et lesdits éléments conducteurs (R+, R-) étant reliés à la station de recharge (SR), ledit système de recharge comprenant une unité électronique au sol (3) et une unité électronique embarquée (4) sur le véhicule (1), pilotant les opérations de recharge à l'arrêt.

Selon l'invention, le système de recharge comprend trois éléments conducteurs (R+, R-), lesquels sont centrés entre deux rails porteurs (5a, 5b) d'une voie ferroviaire et présentent une répartition symétrique des polarités positive(s) et négative(s).

## Description

### Domaine technique

La présente invention se rapporte au domaine technique général de la recharge électrique, par exemple automatisée ou mécanisée de batteries de traction équipant des véhicules ferroviaires ou routiers. L'invention concerne notamment le domaine technique des recharges électriques par le sol, effectuée par contact avec un système de recharge lorsque les véhicules sont à l'arrêt.

L'invention concerne plus particulièrement la sécurisation des opérations de recharges de véhicules à traction électrique.

### Etat de la technique

Il existe différentes solutions techniques mettant en oeuvre une recharge par le sol, notamment des solutions pour des véhicules ferroviaires, utilisant les rails porteurs pour établir un retour de courant électrique .

Les solutions techniques existantes sont souvent complexes à réaliser car elles ne sont compatibles ni avec un positionnement approximatif des véhicules lors des opérations de recharge, ni avec des véhicules bidirectionnels (pouvant effectuer des demi-tours).

Ces solutions nécessitent un retour par les rails porteurs du courant de charge, ce qui n'est pas réalisable lorsque le véhicule est de petite longueur avec un nombre limité d'essieux. La faible surface de contact entre les rails et les roues induit alors un échauffement important entre la roue et le rail lorsque le véhicule est à l'arrêt et en recharge. En outre, ces courants de charge peuvent polluer les courants de circuits de voie, pouvant entraîner à tort des non-détections de véhicules. Ces solutions présentent également des pièces conductrices sous tension, non protégées par des carters.

### Description de l'invention

L'objet de la présente invention vise par conséquent à pallier les inconvénients de l'art antérieur en proposant un nouveau procédé de contrôle pour sécuriser les opérations de rechargement des batteries/système de stockage d'énergie électrique d'un véhicule à traction électrique.

Un autre objet de la présente invention vise à proposer un nouveau système de rechargement par le sol d'un véhicule à traction électrique simple, fiable et peu encombrant pour mettre oeuvre le procédé de contrôle conforme à l'invention.

Un autre objet de la présente invention vise à proposer un nouveau système de rechargement par le sol d'un véhicule à traction électrique ne nécessitant pas des moyens embarqués lourds pour effectuer les opérations de recharge.

Un autre objet de la présente invention vise à proposer un nouveau système de rechargement par le sol d'un véhicule à traction électrique, adapté pour des véhicules ferroviaires bidirectionnels ou pour des véhicules routiers unidirectionnels.

Un autre objet de l'invention vise à proposer un nouveau système de rechargement par le sol compatible avec un positionnement approximatif des véhicules lors des opérations de recharge.

Un autre objet de l'invention vise à proposer un nouveau système de rechargement par le sol ne nécessitant pas un retour de courant par les rails porteurs et ne présentant par conséquent pas les inconvénients associés au retour de courant par lesdits rails porteurs, lors des opérations de recharge à l'arrêt.

Un autre objet de l'invention vise à proposer un nouveau système de rechargement par le sol ne présentant pas des surfaces sous tension électrique non protégées par exemple par des carters.

Les objets assignés à l'invention sont atteints à l'aide d'un système de recharge d'un véhicule guidé à traction électrique, comprenant une unité de stockage d'énergie électrique rechargeable, au moins un patin collecteur de polarité positive P+ et au moins un patin collecteur de polarité négative P-, déplaçables entre une position relevée et un position abaissée en contact avec des éléments conducteurs R+, R- correspondants d'une station de recharge SR au sol fournissant une tension et un courant de recharge continus, lesdits patins collecteurs P+, P- étant reliés à l'unité de stockage et lesdits éléments conducteurs R+, R- étant reliés à la station de recharge SR au sol, ledit système de recharge comprenant une unité électronique au sol et une unité électronique embarquée sur le véhicule, pilotant les opérations de recharge à l'arrêt, caractérisé en ce qu'il comprend au moins trois éléments conducteurs R+, R-, lesquels sont centrés entre deux rails porteurs d'une voie ferroviaire et présentent une répartition symétrique des polarités positive(s) et négative(s).

Selon un exemple de réalisation, le système de recharge comprend un élément conducteur complémentaire Rcom de part et d'autre des éléments conducteurs R+, R- et un patin collecteur complémentaire Pcom déplaçable entre une position relevée et une position abaissée en contact avec l'un des éléments conducteurs complémentaires Rcom, ledit patin collecteur Pcom étant relié à l'unité électronique embarquée et ledit élément conducteur Rcom étant relié à l'unité électronique au sol, de manière à établir une ligne de communication entre le véhicule et la station de recharge SR.

Les objets assignés à l'invention sont atteint également à l'aide d'un système de recharge d'un véhicule non guidé à traction électrique, comprenant une unité de stockage d'énergie électrique rechargeable, au moins un patin collecteur de polarité positive P+, au moins un patin collecteur de polarité négative P-, et un patin collecteur Pt relié à la masse dudit véhicule, lesdits patins collecteurs P+, P-, Pt étant déplaçables entre une position relevée et une position abaissée en contact avec des éléments conducteurs R+, R-, Rt correspondants d'une station de recharge SR au sol fournissant une tension et un courant de recharge continus, lesdits patins collecteurs (P+, P-, Pt) étant reliés à l'unité de stockage et lesdits éléments conducteurs R+, R-, Rt étant reliés à la station de recharge SR au sol, ledit système de recharge comprenant une unité électronique au sol et une unité électronique embarquée sur le véhicule pilotant les opérations de recharge à l'arrêt, caractérisé en ce que les éléments conducteurs R+, R-, Rt sont disposés sur une voie routière de circulation ou de stationnement et comprennent un élément conducteur de polarité positive R+, un élément conducteur de polarité négative R- et un élément conducteur relié à la terre Rt destiné à venir en contact avec un des patin collecteur Pt relié à la masse du véhicule.

Les objets assignés à l'invention sont atteints à l'aide d'un système de recharge d'un véhicule non guidé à traction électrique, comprenant une unité de stockage d'énergie électrique rechargeable, ladite unité de stockage étant isolée électriquement par rapport à son boîtier et par rapport au châssis du véhicule, au moins un patin collecteur de polarité positive P+ et au moins un patin collecteur de polarité négative P-, lesdits patins collecteurs P+, P- étant déplaçables entre une position relevée et une position abaissée en contact avec des éléments conducteurs R+, R- correspondants d'une station de recharge SR au sol fournissant une tension et un courant de recharge continus, lesdits patins collecteurs P+, P- étant reliés à l'unité de stockage et lesdits éléments conducteurs R+, R- étant reliés à la station de recharge SR au sol, ledit système de recharge comprenant une unité électronique au sol et une unité électronique embarquée sur le véhicule et isolée électriquement par rapport au châssis dudit véhicule, les unités électroniques embarquée et au sol pilotant les opérations de recharge à l'arrêt, caractérisé en ce que les éléments conducteurs R+, R- sont disposés sur une voie routière de circulation ou de stationnement et comprennent un élément conducteur de polarité positive R+ et un élément conducteur de polarité négative R-.

Selon un exemple de réalisation, le système de recharge comprend un élément conducteur complémentaire Rcom et un patin collecteur complémentaire Pcom déplaçable entre une position relevée et une position abaissée en contact avec l'élément conducteur complémentaire Rcom, ledit patin collecteur Pcom étant relié à l'unité électronique embarquée et ledit élément conducteur Rcom étant relié à l'unité électronique au sol, de manière à établir une ligne de communication entre le véhicule et la station de recharge SR.

Selon un exemple de réalisation, le système de recharge comprend un système de communication non filaire pour transmettre des informations et/ou des consignes entre le véhicule et la station de recharge SR.

Les objets assignés à l'invention sont atteints également à l'aide d'un procédé de contrôle pour la mise en sécurité d'un système de recharge comprenant les étapes :
a) positionner le véhicule et les patins collecteurs P+, P-, Pt au-dessus des éléments conducteurs R+, R-, Rt,
b) abaisser les patins collecteurs P+, P-, Pt pour réaliser un contact avec les éléments conducteurs R+, R-, Rt de même polarité, lesdits patins collecteurs P+, P-, Pt hors tension et lesdits éléments conducteurs R+, R-, Rt étant hors tension, en court-circuit et reliés à la terre,
c) utiliser l'unité électronique embarquée et l'unité électronique au sol pour réaliser un circuit électrique dont la fermeture, concomitante à l'abaissement des patins collecteurs P+, P-, Pt et à l'établissement du contact avec les éléments conducteurs R+, R-, Rt, génère la circulation d'un courant électrique sous une tension faible, grâce à un générateur de tension Eg de l'unité électronique au sol et grâce à un générateur de tension Emr de l'unité électronique embarquée,
d1) utiliser la circulation de ce courant électrique pour charger un condensateur Cmr de l'unité électronique embarquée et deux condensateurs Cg1, Cg2 de l'unité électronique au sol,
e1a) grâce à l'unité électronique embarquée, on mesure la tension électrique Umr aux bornes du condensateur Cmr et on compare son évolution à un abaque enregistré pendant un temps t1,
e1b) simultanément, grâce à l'unité électronique au sol, on mesure les tensions électriques Ug1 et Ug2 aux bornes des condensateurs Cg1 et Cg2 et on compare leurs évolutions à un abaque enregistré pendant le temps t1,
e1c) en cas de correspondance au bout du temps t1, l'unité électronique embarquée interrompt la circulation du courant sous c),
e1d) en cas de correspondance au bout du temps t1, mais après un délai t2 complémentaire, l'unité électronique au sol interrompt la liaison avec la terre et le court-circuit sous b),
e1e) après un délai t3, d'une durée supérieure à t2, initié par l'interruption sous e1b), l'unité électronique embarquée relie les patins collecteurs P+, P- au BUS continu +HV/-HV du véhicule, lesdites mesures des tensions électriques Ug1 et Ug2, permettant à l'unité électronique au sol d'identifier les éléments conducteurs R+, R- aux dessus desquels se trouvent les patins collecteurs P+, P-.

Les objets assignés à l'invention sont atteints également à l'aide d'un procédé de contrôle pour la mise en sécurité d'un système de recharge comprenant les étapes :
a) positionner le véhicule et les patins collecteurs P+, P-, Pt au-dessus des éléments conducteurs R+, R-, Rt,
b) abaisser les patins collecteurs P+, P-, Pt pour réaliser un contact avec les éléments conducteurs R+, R-, Rt de même polarité, lesdits patins collecteurs P+, P-, Pt hors tension et lesdits éléments conducteurs R+, R-, Rt étant hors tension, en court-circuit et reliés à la terre,
c) utiliser l'unité électronique embarquée et l'unité électronique au sol pour réaliser un circuit électrique dont la fermeture, concomitante à l'abaissement des patins collecteurs P+, P-, Pt et à l'établissement du contact avec les éléments conducteurs R+, R-, Rt, génère la circulation d'un courant électrique sous une tension faible, grâce à un générateur de tension Eg de l'unité électronique au sol et grâce à un générateur de tension Emr de l'unité électronique embarquée,
d2) on utilise la circulation de ce courant électrique pour charger un condensateur Cmr de l'unité électronique embarquée, ladite circulation de courant étant interrompue si le patin collecteur P+ n'est pas en contact avec l'élément conducteur R+ ou si le patin collecteur P- n'est pas en contact avec l'élément conducteur R-,
e2a) grâce à l'unité électronique embarquée, on mesure la tension électrique Umr aux bornes du condensateur Cmr et on compare son évolution à un abaque enregistré pendant un temps t1 et en cas de correspondance au bout de ce temps t1, l'unité électronique embarquée interrompt la circulation du courant sous c), e2b) puis l'unité électronique embarquée demande à l'unité électronique au sol d'interrompre la liaison avec la terre et le court-circuit sous b),
e2c) lorsque l'unité électronique au sol a acquitté e2b), elle relie les patins collecteurs P+ et P- au BUS continu +HV/-HV du véhicule.

Les objets assignés à l'invention sont atteints également à l'aide d'un procédé de contrôle pour la mise en sécurité d'un système de recharge comprenant les étapes :
a) positionner le véhicule et les patins collecteurs P+, P-, Pt au-dessus des éléments conducteurs R+, R-, Rt,
b) abaisser les patins collecteurs P+, P-, Pt pour réaliser un contact avec les éléments conducteurs R+, R-, Rt de même polarité, lesdits patins collecteurs P+, P-, Pt hors tension et lesdits éléments conducteurs R+, R-, Rt étant hors tension, en court-circuit et reliés à la terre,
c) utiliser l'unité électronique embarquée et l'unité électronique au sol pour réaliser un circuit électrique dont la fermeture, concomitante à l'abaissement des patins collecteurs P+, P-, Pt et à l'établissement du contact avec les éléments conducteurs R+, R-, Rt, génère la circulation d'un courant électrique sous une tension faible, grâce à un générateur de tension Eg de l'unité électronique au sol et grâce à un générateur de tension Emr de l'unité électronique embarquée,
d3) on utilise la circulation de ce courant électrique pour charger des condensateurs Cg1 et Cg2 de l'unité électronique au sol, ladite circulation de courant étant interrompue si le patin collecteur P+ n'est pas en contact avec l'élément conducteur R+ ou si le patin collecteur P- n'est pas en contact avec l'élément conducteur R-,
e3a) grâce à l'unité électronique au sol, on mesure les tensions électriques Ug1 et Ug2 aux bornes des condensateurs Cg1 et Cg2 et on compare leurs évolutions à un abaque enregistré pendant un temps t1 et en cas de correspondance de l'une des évolutions mesurées au bout de ce temps t1, l'unité électronique au sol demande à l'unité électronique embarquée d'interrompre la circulation du courant sous c), e3b) puis l'unité électronique embarquée demande à l'unité électronique au sol d'interrompre la liaison avec la terre et le court-circuit sous b),
e3c) lorsque l'unité électronique au sol a acquitté e3b), l'unité électronique embarquée relie les patins collecteurs P+ et P- au BUS continu +HV/-HV du véhicule.

Selon un exemple de mise en oeuvre, le procédé de contrôle comprend les étapes:
- f1a) l'unité électronique au sol mesure au niveau des éléments conducteurs R+, R-, grâce à des capteurs de tension électrique, les tensions électriques Ur1 et Ur2 dont au moins une correspond à une tension électrique du BUS continu +HV/-HV du véhicule et transmet cette tension électrique du BUS continu +HV/-HV comme tension électrique de consigne à la station de recharge SR,
- f1b) l'unité électronique au sol mesure simultanément, grâce à un capteur de tension électrique, la tension électrique Ur3 délivrée par la station de recharge (SR) et lorsque la tension délivrée par la station de recharge SR est proche de la tension du BUS continu +HV/-HV du véhicule, l'unité électronique au sol commande l'alimentation des éléments conducteurs R+, R-.

Selon un exemple de mise en oeuvre, le procédé de contrôle comprend une transmission d'informations entre de l'unité électronique embraquée laquelle contrôle l'unité de stockage et l'unité électronique au sol.

Selon un exemple de mise en oeuvre, le procédé de contrôle comprend une transmission non filaire via WIFI ou filaire d'informations du genre une consigne d'intensité de courant de recharge.

Le procédé de contrôle conforme à l'invention présente l'avantage de pouvoir être mis en oeuvre pour les opérations de recharge de véhicules ferroviaires et de véhicules routiers et notamment des véhicules ferroviaires bidirectionnels amenés à faire des demi-tours ou des véhicules routiers unidirectionnels.

Le procédé de contrôle conforme à l'invention présente l'avantage de sécuriser les opérations de recharge des véhicules à l'arrêt sur des voies de circulation au niveau d'une station de recharge.

L'avantage du système de recharge conforme à l'invention réside dans sa simplicité et dans son adaptabilité à tous types de véhicules à traction électrique nécessitant des recharges de ses batteries par le sol.

En outre, le système de recharge s'intègre parfaitement dans un environnement ferroviaire comportant des voies équipées de caténaires ou autres systèmes d'alimentation électriques.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1a est une illustration schématique d'un exemple de réalisation d'un système de recharge conforme à l'invention, adapté pour véhicules guidés,
- la figure 1b est une illustration schématique d'une variante de réalisation du système de recharge conforme à l'invention de la figure 1a, adapté pour véhicules guidés,
- la figure 2 est une illustration schématique d'un autre exemple de réalisation d'un système de recharge conforme à l'invention, adapté pour véhicules guidés,
- la figure 3a est une illustration schématique d'un premier exemple de réalisation d'un système de recharge conforme à l'invention, adapté pour véhicules non guidés,
- la figure 3b est une illustration schématique d'une variante de réalisation du système de recharge conforme à l'invention de la figure 3a, adapté pour véhicules non guidés,
- la figure 4a est une illustration schématique d'un deuxième exemple de réalisation d'un système de recharge conforme à l'invention, adapté pour véhicules non guidés,
- la figure 4b est une illustration schématique d'une variante de réalisation du système de recharge conforme à l'invention de la figure 4a, adapté pour véhicules non guidés,
- la figure 5 est une illustration schématique d'un troisième exemple de réalisation d'un système de recharge conforme à l'invention, adapté pour véhicules non guidés,
- la figure 6 est une illustration schématique d'un quatrième exemple de réalisation d'un système de recharge conforme à l'invention, adapté pour véhicules non guidés,
- la figure 7 est une représentation synoptique d'un premier exemple de réalisation d'un circuit électronique pour la mise en oeuvre du procédé de contrôle conforme à l'invention, adapté au système de recharge de la figure 1a,
- la figure 8 est une représentation synoptique d'un deuxième exemple de réalisation d'un circuit électronique pour la mise en oeuvre du procédé de contrôle conforme à l'invention, adapté au système de recharge de la figure 1b,
- la figure 9 est une représentation synoptique d'un troisième exemple de réalisation d'un circuit électronique pour la mise en oeuvre du procédé de contrôle conforme à l'invention, adapté au système de recharge de la figure 1b,
- la figure 10 est une représentation synoptique d'un quatrième exemple de réalisation d'un circuit électronique pour la mise en oeuvre du procédé de contrôle conforme à l'invention, adapté au système de recharge de la figure 2, et
- la figure 11 est une représentation synoptique d'un cinquième exemple de réalisation d'un circuit électronique pour la mise en oeuvre du procédé de contrôle conforme à l'invention, adapté au système de recharge de la figure 2.

### Mode(s) de réalisation de l'invention

Les éléments structurellement et fonctionnellement identiques présents sur plusieurs figures distinctes, sont affectés d'une même référence numérique ou alphanumérique.

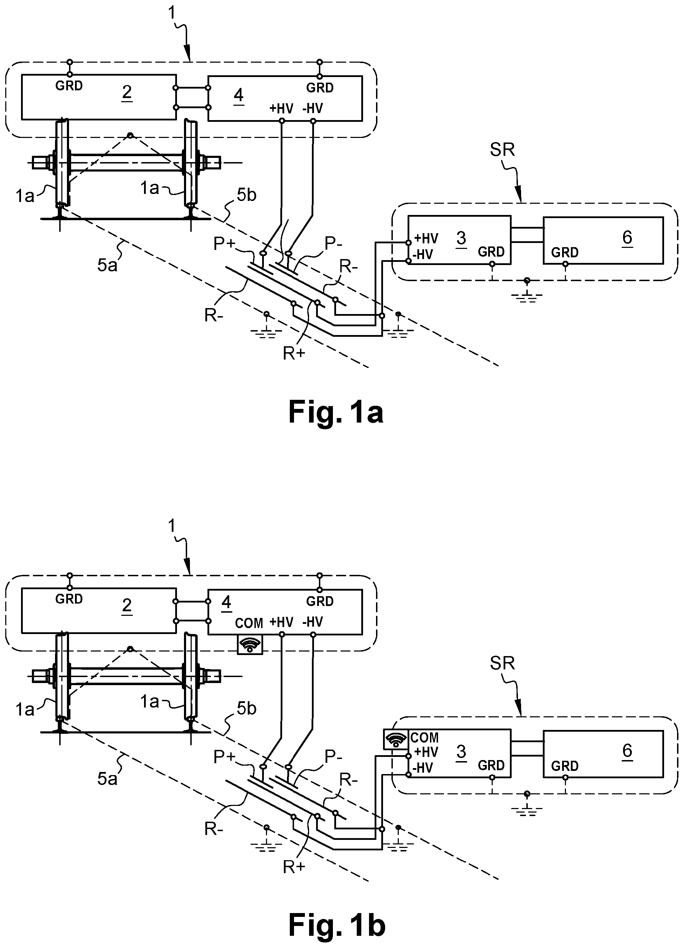

La figure 1a est illustration schématique d'un exemple de réalisation d'un système de recharge, adapté à un véhicule 1 guidé, à traction électrique.

Le système de recharge comprend une unité de stockage 2 d'énergie électrique, rechargeable, au moins un patin collecteur P+ de polarité positive et au moins un patin collecteur P- de polarité négative, déplaçables entre une position relevée et une position abaissée en contact avec des éléments conducteurs R+ et R-correspondants d'une station de recharge SR.

La station de recharge SR est localisée au sol et fournit un courant de recharge continu. Les patins collecteurs P+ et P- sont reliés à l'unité de stockage 2 et les éléments conducteurs R+ et R- sont reliés à la station de recharge SR au sol.

Le système de recharge comprend une unité électronique au sol 3 et une unité électronique embarquée 4 sur le véhicule 1, pilotant les opérations de recharge à l'arrêt dudit véhicule 1.

Le système de recharge comprend trois éléments conducteurs R-, R+, lesquels sont centrés entre deux rails porteurs 5a et 5b d'une voie ferroviaire. Les rails porteurs 5a et 5b assurent la mise à la masse GRD du véhicule 1 par l'intermédiaire de roues 1a.

Les trois éléments conducteurs R-, R+ présentent une répartition symétrique des polarités positive(s) et négative(s). Les trois éléments conducteurs R- et R+ comprennent un élément conducteur R+ de polarité positive centré entre deux éléments conducteurs de polarité négative R-.

La station de recharge SR comporte avantageusement un système de connexion 6 à un réseau d'alimentation électrique ainsi qu'un convertisseur dont la fonction est de transformer le courant alternatif du réseau en un courant continu, dont la tension permet de recharger la batterie.

Dans un autre exemple de réalisation, les éléments conducteurs R-, R+ présentent également une répartition symétrique des polarités positive(s) et négative(s), mais lesdits trois éléments conducteurs R- et R+ comprennent alors un élément conducteur R- de polarité négative centré entre deux éléments conducteurs R+ de polarité positive.

La figure 1b est une illustration schématique d'une variante de réalisation du système de recharge de la figure 1a. Dans cette variante de réalisation, le système de recharge comprend un système de transmission 1b, non filaire, par exemple de type WIFI, permettant à l'unité électronique embarquée 4 et à l'unité électronique au sol 3 de communiquer, dans le but notamment de permettre à l'unité électronique embarquée 4, laquelle contrôle l'unité de stockage 2, de transmettre à la station de recharge SR, une consigne d'intensité de courant de recharge.

Selon un autre exemple de réalisation, le système de transmission peut également comporter un système de transmission par courant porteur (CPL), se basant sur une liaison filaire mais sans utilisation de câbles supplémentaires.

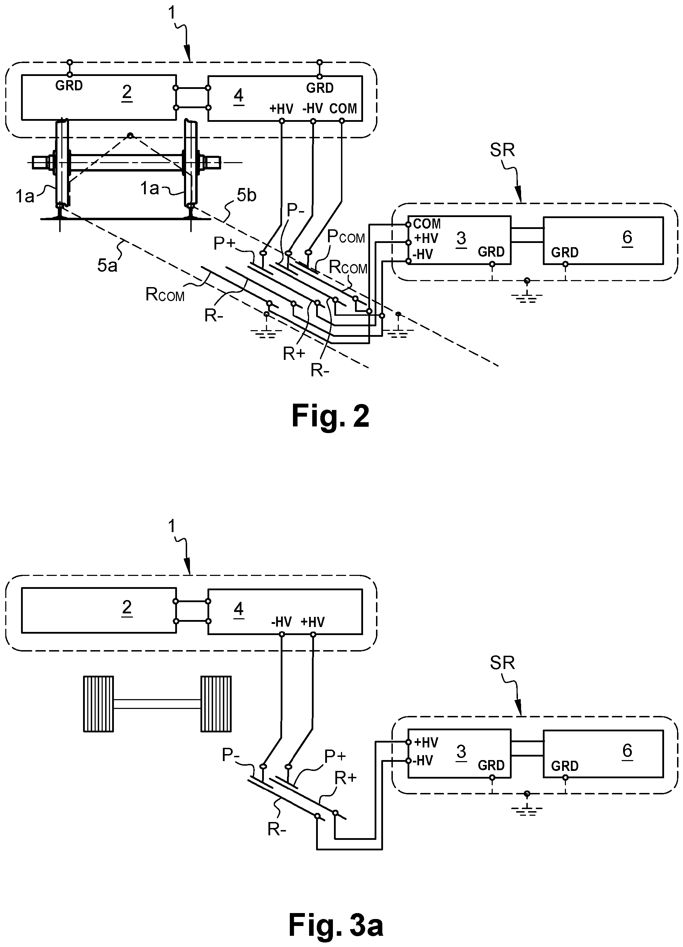

Dans l'exemple d réalisation illustré à la figure 2, le système de recharge comprend deux éléments conducteurs Rcom extérieurs, deux éléments conducteurs R- de polarité négative et un élément conducteur R+ de polarité positive centré entre lesdits éléments conducteurs R-, de manière à présenter une répartition symétrique des différentes polarités et des éléments conducteurs Rcom.

Le système de recharge comprend également un patin collecteur complémentaire Pcom, déplaçable par exemple simultanément avec lesdits autres patins collecteurs P+ et P-, entre une position relevée et une position abaissée en contact avec l'un des deux éléments conducteurs complémentaires Rcom. Un élément conducteur complémentaire Rcom est disposé de part et d'autre des éléments conducteurs R+ et R- pour assurer une liaison électrique et une liaison de communication identiques, pour le véhicule 1 après avoir effectué un demi-tour.

Le patin collecteur Pcom est relié à l'unité électronique embarquée 4 et l'élément conducteur Rcom est relié à l'unité électronique au sol 3, de manière à établir une ligne de communication physique entre le véhicule 1 et la station de recharge SR.

La figure 3a est une illustration schématique d'un premier exemple de réalisation d'un système de recharge, adapté à un véhicule 1 non guidé, appelé aussi véhicule 1 routier. Dans l'exemple de réalisation illustré à la figure 3a, le système de recharge comprend un patin collecteur P+ de polarité positive et un patin collecteur P- de polarité négative, lesdits patins collecteurs P+ et P- étant déplaçables entre une position relevée et une position abaissée en contact avec des éléments conducteurs R+ et R- correspondants de la station de recharge SR au sol.

Les patins collecteurs P+ et P- sont reliés à l'unité de stockage 2 via l'unité électronique embarquée 4, lesquelles sont isolées électriquement par rapport au sol et par rapport au châssis du véhicule 1. Les éléments conducteurs R+ et R-sont avantageusement disposés sur une voie routière de circulation ou de stationnement adaptée à un véhicule 1 non guidé.

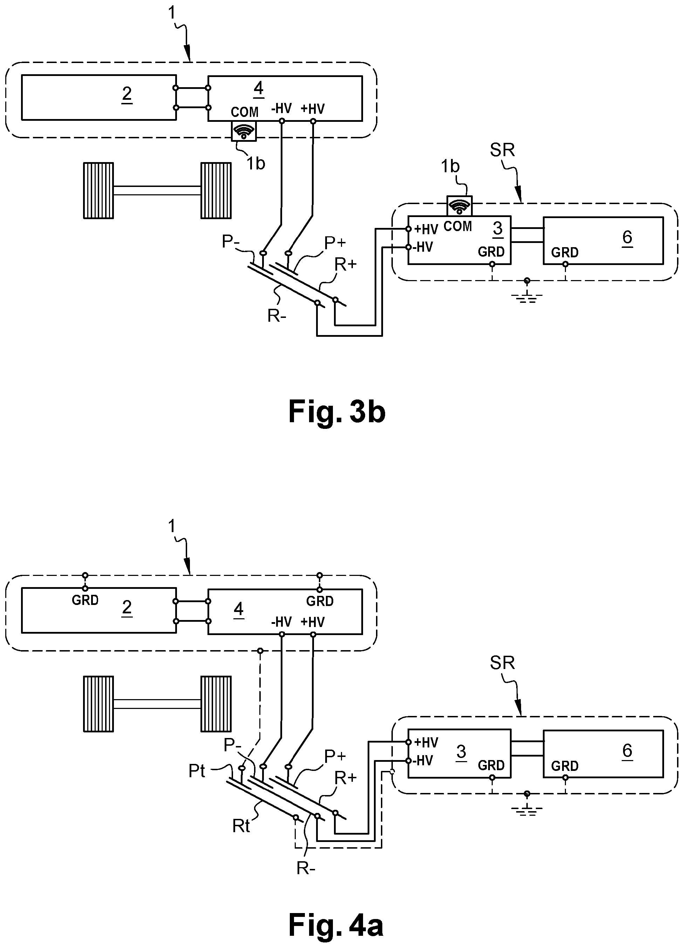

La figure 3b est une illustration schématique d'une variante de réalisation du système de recharge de la figure 3a. Dans cette variante de réalisation, le système de recharge comprend un système de transmission 1b, non filaire, pour transmettre, par exemple par WIFI, de l'unité électronique embraquée 4, laquelle contrôle l'unité de stockage 2, à la station de recharge SR, une consigne d'intensité de courant de recharge.

La figure 4a est une illustration schématique d'un deuxième exemple de réalisation d'un système de recharge conforme à l'invention, adapté pour véhicules 1 non guidés. Dans cet exemple de réalisation, les éléments conducteurs R+, R- sont disposés sur une voie routière de circulation ou de stationnement et comprennent un élément conducteur R+ de polarité positive, un élément conducteur R- de polarité négative et un élément conducteur Rt relié à la terre. L'élément conducteur Rt est destiné à venir en contact avec un patin collecteur Pt relié à la masse du véhicule 1.

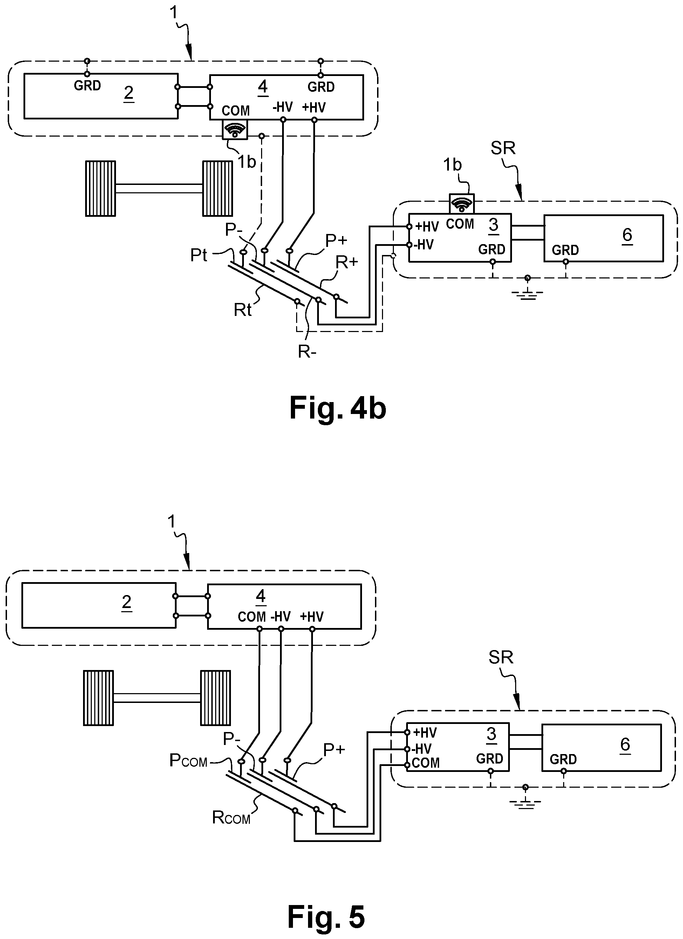

La figure 4b est une illustration schématique d'une variante de réalisation du système de recharge de la figure 4a. Dans cette variante de réalisation, le système de recharge comprend un système de transmission 1b, non filaire, pour transmettre, par exemple par WIFI, de l'unité électronique embarquée 4, laquelle contrôle l'unité de stockage 2, à la station de recharge SR, une consigne d'intensité de courant de recharge.

La figure 5 est une illustration schématique d'un troisième exemple de réalisation d'un système de recharge conforme à l'invention, adapté pour véhicules 1 non guidés. Dans ce troisième exemple de réalisation, le système de recharge comprend un élément conducteur Rcom, un élément conducteur R- de polarité négative et un élément conducteur R+ de polarité positive.

Le système de recharge comprend un patin collecteur complémentaire Pcom, déplaçable par exemple simultanément avec lesdits autres patins collecteurs P+ et P-, entre une position relevée et une position abaissée en contact avec l'élément conducteur complémentaire Rcom. Les patins collecteurs P+ et P-sont reliés à l'unité de stockage 2 via l'unité électronique embarquée 4, les éléments conducteurs dans ces unités sont isolés électriquement par rapport au sol et par rapport au châssis du véhicule 1. Une liaison entre le châssis du véhicule 1 et la terre (GRD), appelée aussi mise à la masse, n'est donc pas nécessaire.

Le patin collecteur Pcom est relié à l'unité électronique embarquée 4 et l'élément conducteur Rcom est relié à l'unité électronique au sol 3, de manière à établir une ligne de communication, du genre liaison filaire, entre le véhicule 1 et la station de recharge SR.

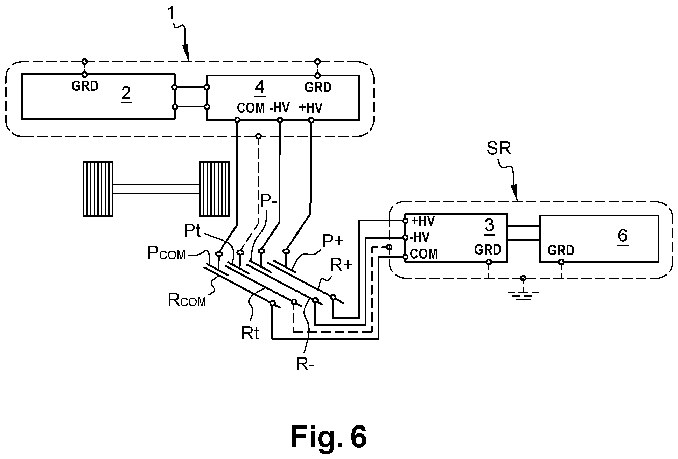

La figure 6 est une illustration schématique d'un quatrième exemple de réalisation d'un système de recharge conforme à l'invention, adapté pour véhicules 1 non guidés. Dans ce quatrième exemple de réalisation, le système de recharge comprend un élément conducteur Rcom, un élément conducteur R- de polarité négative et un élément conducteur R+ de polarité positive.

Le système de rechargement comprend également un patin collecteur complémentaire Pcom, déplaçable par exemple simultanément avec lesdits autres patins collecteurs P+ et P-, entre une position relevée et une position abaissée en contact avec l'élément conducteur complémentaires Rcom. Le système de rechargement comprend également un élément conducteur Rt relié à la terre et destiné à venir en contact avec un patin collecteur Pt relié à la masse du véhicule 1.

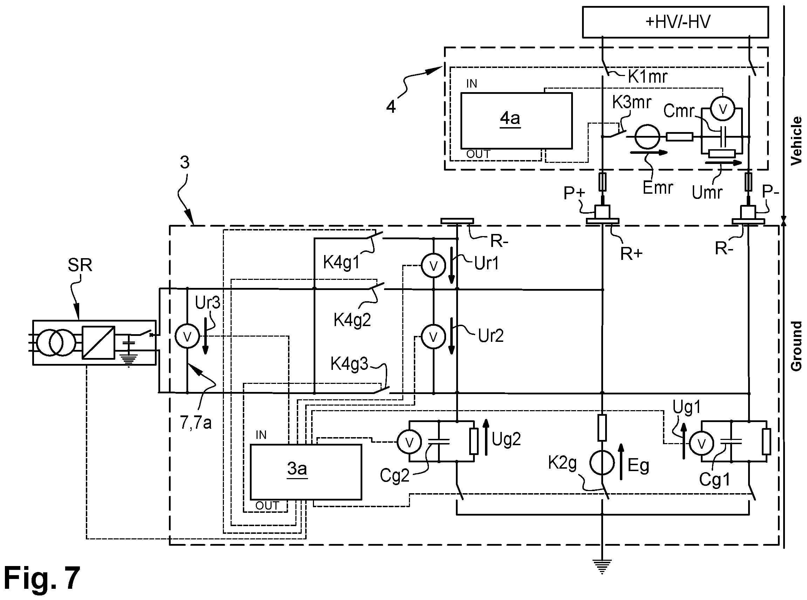

La figure 7 est une représentation synoptique d'un premier exemple de réalisation d'un circuit électronique pour la mise en oeuvre du procédé de contrôle conforme à l'invention, adapté au système de recharge notamment de la figure 1a.

L'unité électronique au sol 3 comprend avantageusement une unité de commande au sol 3a qui pilote différents contacteurs et l'unité électronique embraquée 4 comprend avantageusement une unité de commande embarquée 4a qui pilote d'autres contacteurs, en recevant par exemple des informations issues de capteurs. Le procédé de contrôle est mis en oeuvre avec des étapes qui sont détaillées ci-après.

Selon une étape a) du procédé de contrôle, on positionne le véhicule 1 et les patins collecteurs P+, P-, au-dessus des éléments conducteurs R+, R-respectifs. Des repères visuels peuvent être prévus pour effectuer ce positionnement.

Selon une étape b), on abaisse les patins collecteurs P+ et P- pour réaliser un contact avec les éléments conducteurs R+ et R- respectifs de même polarité. Les patins collecteurs P+ et P- sont hors tension et les éléments conducteurs R+ et R- sont hors tension, en court-circuit et reliés à la terre. Un contacteur K1mr permettant de relier les patins collecteurs P+ et P- à un BUS continu +HV/-HV du véhicule lest en position ouverte. Un contacteur K2g de l'unité électronique au sol 3 permettant de relier les éléments conducteurs R+ et R- en court-circuit entre eux et à la terre, est en position fermée.

Selon une étape c), on utilise l'unité électronique embarquée 4 et l'unité électronique au sol 3 pour réaliser un circuit électrique dont la fermeture, concomitante à l'abaissement des patins collecteurs P+ et P- et à l'établissement du contact avec les éléments conducteurs R+ et R- respectifs, génère la circulation d'un courant électrique sous une tension faible, par exemple inférieure à 20 V.

Cette tension faible est obtenue par exemple grâce à un générateur de tension Eg de l'unité électronique au sol 3 et à un générateur de tension Emr de l'unité électronique embarquée 4. La fermeture de ce circuit électrique est obtenue par l'intermédiaire d'un contacteur K3mr de l'unité électronique embarquée 4, mis dans une position fermée simultanément à l'abaissement des patins collecteurs P+ et P-

Selon une étape d1) on utilise la circulation de ce courant électrique pour charger d'une part un condensateur Cmr de l'unité électronique embarquée 4 et d'autre part un condensateur Cg1 ou un condensateur Cg2 de l'unité électronique au sol 3. Si le patin collecteur P+ n'est pas en contact avec l'élément conducteur R+ ou si le patin collecteur P- n'est pas en contact avec l'élément conducteur R-, le circuit électrique comprenant le condensateur Cg1 ou Cg2 et Cmr reste ouvert et il n'y a pas de circulation de courant électrique dans ledit circuit.

Selon une étape e1a), grâce à l'unité électronique embarquée 4, on mesure la tension électrique Umr aux bornes du condensateur Cmr et on compare son évolution à un abaque enregistré pendant un temps t1.

Simultanément, selon une étape e1b), grâce à l'unité électronique au sol 3, on mesure les tensions électriques Ug1 et Ug2 aux bornes des condensateurs Cg1 et Cg2 et on compare leurs évolutions à un abaque enregistré pendant le temps t1. Les mesures des tensions électriques Ug1 et Ug2 permettent à l'unité électronique au sol 3 d'identifier les éléments conducteurs R+, R- au-dessus desquels se trouvent les patins collecteurs P+, P-. En cas de correspondance au bout du temps t1, l'unité électronique embarquée 4 interrompt la circulation du courant en ouvrant le contacteur K3mr.

Ensuite, selon une étape e1c), en cas de correspondance au bout du temps t1, mais après un délai t2 complémentaire, l'unité électronique au sol 3 interrompt la liaison avec la terre et le court-circuit sous b) en ouvrant le contacteur K2g.

Ensuite selon une étape e1d), après un délai t3, d'une durée supérieure au délai t2, initié par l'interruption sous e1b), l'unité électronique embarquée 4 relie les patins collecteurs P+, P- à un BUS continu +HV/-HV du véhicule 1 en fermant un contacteur K1mr.

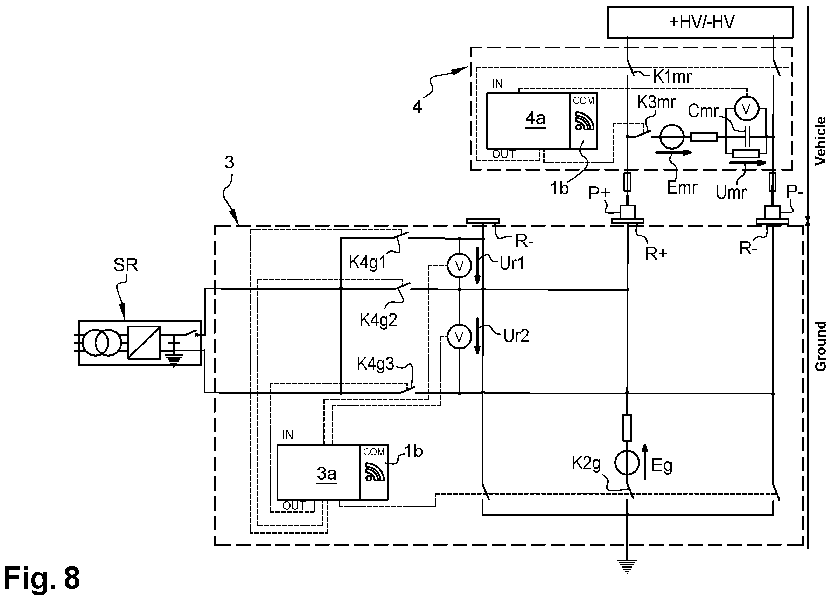

La figure 8 est une représentation synoptique d'un deuxième exemple de réalisation d'un circuit électronique pour la mise en oeuvre du procédé de contrôle, adapté par exemple au système de recharge de la figure 1b. Dans cet exemple de mise en oeuvre, les unités de commande sol 3a et embarquée 4a comprennent un système de transmission 1b non filaire. En outre, les condensateurs Cg1 et cg2 sont supprimés.

Les étapes a), b) et c) ci-dessus demeurent inchangées. Les étapes d1), e1a), e1b), e1c), e1d) sont remplacées respectivement par les étapes d2), e2a), e2b) et e2c) détaillées ci-après.

Selon l'étape d2) on utilise la circulation du courant électrique pour charger le condensateur Cmr de l'unité électronique embarquée 4. Si le patin collecteur P+ n'est pas en contact avec l'élément conducteur R+ ou si le patin collecteur P- n'est pas en contact avec l'élément conducteur R-, le circuit électrique comprenant le condensateur Cmr reste ouvert et il n'y a pas de circulation de courant électrique dans ledit circuit.

Selon l'étape e2a) grâce à l'unité électronique embarquée 4, on mesure la tension électrique Umr aux bornes du condensateur Cmr et on compare son évolution à un abaque enregistré pendant un temps t1.

En cas de correspondance au bout de ce temps t1, l'unité électronique embarquée 4 ouvre le contacteur K3mr puis demande, selon une étape e2b), à l'unité électronique au sol 3 d'ouvrir le contacteur K2g via le système de transmission 1b.

Lorsque l'unité électronique au sol 3 a acquitté l'ouverture du contacteur K2g, elle relie les patins collecteurs P+ et P- au BUS continu +HV/-HV du véhicule 1 en fermant le contacteur K1mr, selon une étape e2c).

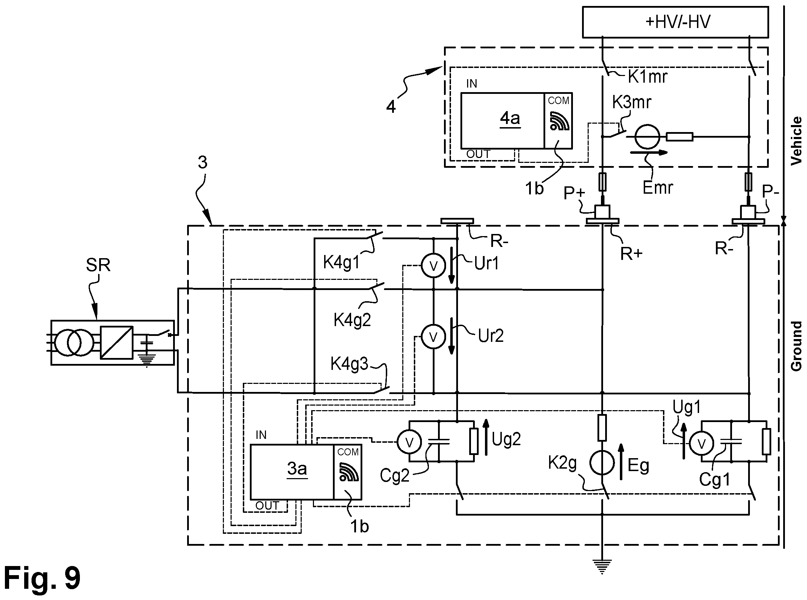

La figure 9 est une représentation synoptique d'un troisième exemple de réalisation d'un circuit électronique pour la mise en oeuvre du procédé de contrôle adapté par exemple au système de recharge de la figure 1b. Dans cet exemple de mise en oeuvre, les unités de commande sol 3a et embarquée 4a comprennent un système de transmission 1b, non filaire. En outre, le condensateur Cmr de l'unité électronique embarquée 4 est supprimé.

Les étapes a), b) et c) ci-dessus demeurent inchangées. Les étapes d1), e1a), e1b), e1c), e1d) sont remplacées par les étapes d3), e3a), e3b), e3c) détaillées ci-après.

Selon l'étape d3), on utilise la circulation du courant électrique pour charger des condensateurs Cg1 et Cg2 de l'unité électronique au sol 3. Les condensateurs Cg1 et Cg2 sont associés chacun à un élément conducteur R-. La circulation de courant et donc la charge des condensateurs Cg1 et Cg2 est interrompue si le patin collecteur P+ n'est pas en contact avec l'élément conducteur R+ ou si le patin collecteur P- n'est pas en contact avec un élément conducteur R-.

Selon une étape e3a) grâce à l'unité électronique au sol 3, on mesure les tensions électriques Ug1 et Ug2 aux bornes des condensateurs Cg1 et Cg2 et on compare leurs évolutions à un abaque enregistré pendant un temps t1. En cas de correspondance de l'une des évolutions mesurées au bout de ce temps t1, l'unité électronique au sol 3 demande à l'unité électronique embarquée 4, via le système de transmission 1b, d'interrompre la circulation du courant sous c).

Puis selon une étape e3b) l'unité électronique embarquée (4) demande à l'unité électronique au sol 3 d'interrompre la liaison avec la terre et le court-circuit sous b) et ouvre le contacteur K3mr.

Selon une étape e3c), lorsque l'unité électronique au sol 3 a acquitté l'étape e3b), l'unité électronique embarquée 4 relie les patins collecteurs P+ et P- au BUS continu +HV/-HV du véhicule 1.

Selon un exemple de mise en oeuvre, le procédé de contrôle, mis en oeuvre par exemple à l'aide des circuits des figures 7, 8 ou 9, comprend un outre les étapes f1a) et f1b).

Selon l'étape f1a), l'unité électronique au sol 3 mesure au niveau des éléments conducteurs R+, R-, grâce à des capteurs de tension électrique, les tensions électriques Ur1 et Ur2, dont une correspond à une tension électrique du BUS continu +HV/-HV du véhicule 1. La tension électrique est transmise comme tension électrique de consigne à la station de recharge SR.

Selon l'étape f1b), l'unité électronique au sol 3 mesure simultanément, grâce à un capteur de tension électrique, la tension électrique Ur3 délivrée par la station de recharge SR et lorsque la tension délivrée par la station de recharge SR est proche de la tension du BUS continu +HV/-HV du véhicule 1, l'unité électronique au sol 3 commande l'alimentation des éléments conducteurs R+, R-.

Une telle phase appelée « précharge » permet d'éviter l'apparition d'un pic de courant lors de la fermeture des contacteurs K4g1, K4g2 ou K4g3. Cette régulation est obtenue à l'aide d'une branche de mesure et de régulation 7 de l'unité électronique au sol 3,illustrée à la figure 7. La branche de mesure et de régulation 7 comporte avantageusement un voltmètre 7a.

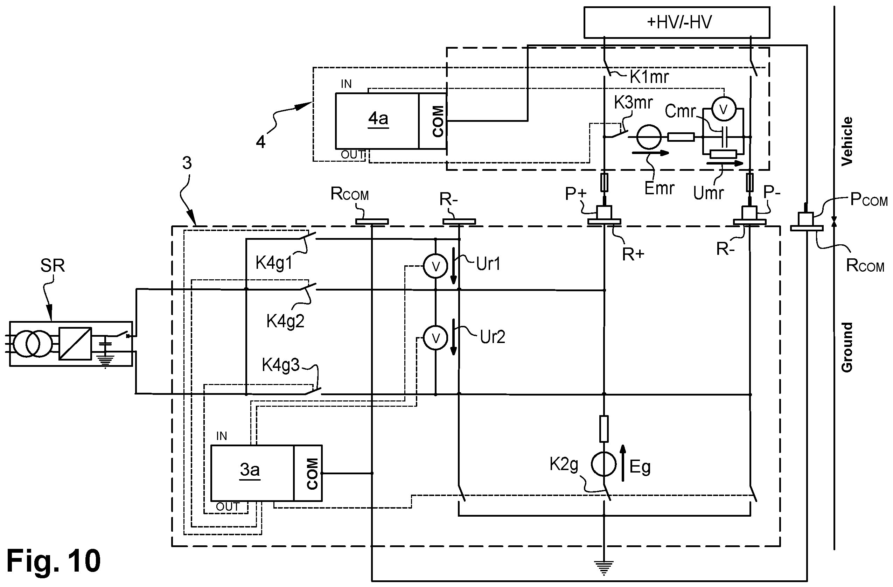

La figure 10 est une représentation synoptique d'un quatrième exemple de réalisation d'un circuit électronique pour la mise en oeuvre du procédé de contrôle conforme à l'invention, adapté par exemple au système de recharge de la figure 2. Ce quatrième exemple de circuit électronique présente un fonctionnement similaire au deuxième exemple de circuit électronique illustré à la figure 8.

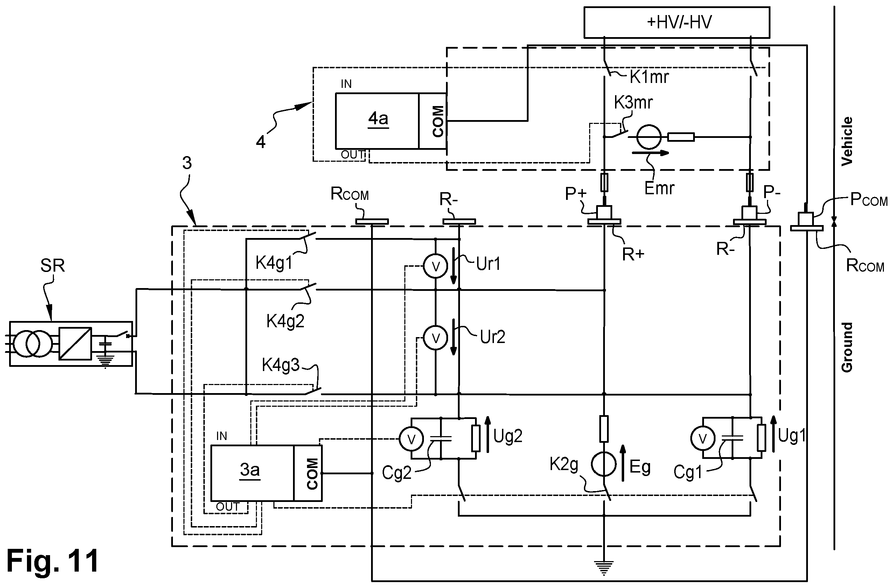

La figure 11 est une représentation synoptique d'un cinquième exemple de réalisation d'un circuit électronique pour la mise en oeuvre du procédé de contrôle conforme à l'invention, adapté par exemple au système de recharge de la figure 2. Ce cinquième exemple de circuit électronique présente un fonctionnement similaire au troisième exemple de circuit électronique illustré à la figure 9.

Dans les exemples de réalisation des figures 10 et 11, le système de transmission 1b est remplacé par un système de transmission filaire dont la partie au sol et la partie embarquée sont reliées par un patin Pcom et des rails Rcom. Le patin Pcom est mu en même temps que les patins P+ et P-.

Selon un exemple de mise oeuvre, le procédé comprend une transmission de l'unité électronique embarquée 4, laquelle contrôle l'unité de stockage 2, à la station de recharge SR, d'une consigne d'intensité de courant de recharge.

Avantageusement, le procédé de recharge comprend une transmission, via le système de transmission1b, non filaire ou par courant porteur (CPL), de la consigne d'intensité de courant de recharge. Selon un autre mode de mise en oeuvre, le procédé de recharge le comprend une transmission, via le patin collecteur complémentaire Pcom en contact avec l'élément conducteur complémentaire Rcom, de la consigne d'intensité de courant de recharge.

Selon un exemple de mise oeuvre, le procédé de recharge consiste à interrompre une opération de recharge, en ramenant à zéro la consigne d'intensité de courant de recharge, par l'intermédiaire de l'unité électronique embarquée 4 contrôlant l'unité de stockage 2.

Il est évident que la présente description ne se limite pas aux exemples explicitement décrits, mais comprend également d'autres modes de réalisation et/ou de mise en oeuvre. Ainsi, une caractéristique technique décrite ou une étape de mise en oeuvre décrite est susceptible d'être remplacée par une caractéristique technique équivalente, respectivement une étape équivalente, sans sortir du cadre de la présente invention tel que défini par les revendications.

## Revendications

1. Système de recharge d'un véhicule (1) guidé à traction électrique, comprenant une unité de stockage (2) d'énergie électrique rechargeable, au moins un patin collecteur de polarité positive (P+) et au moins un patin collecteur de polarité négative (P-), déplaçables entre une position relevée et un position abaissée en contact avec des éléments conducteurs (R+, R-) correspondants d'une station de recharge (SR) au sol fournissant une tension et un courant de recharge continus, lesdits patins collecteurs (P+, P-) étant reliés à l'unité de stockage (2) et lesdits éléments conducteurs (R+, R-) étant reliés à la station de recharge (SR) au sol, ledit système de recharge comprenant une unité électronique au sol (3) et une unité électronique embarquée (4) sur le véhicule (1), pilotant les opérations de recharge à l'arrêt, **caractérisé en ce qu'**il comprend au moins trois éléments conducteurs (R+, R-), lesquels sont centrés entre deux rails porteurs (5a) et (5b) d'une voie ferroviaire et présentent une répartition symétrique des polarités positive(s) et négative(s).

2. Système de recharge selon la revendication 1, **caractérisé en ce qu'**il comprend un élément conducteur complémentaire (Rcom) de part et d'autre des éléments conducteurs (R+, R-) et un patin collecteur complémentaire (Pcom) déplaçable entre une position relevée et une position abaissée en contact avec l'un des éléments conducteurs complémentaires (Rcom), ledit patin collecteur (Pcom) étant relié à l'unité électronique embarquée (4) et ledit élément conducteur (Rcom) étant relié à l'unité électronique au sol (3), de manière à établir une ligne de communication entre le véhicule (1) et la station de recharge (SR).

3. Système de recharge d'un véhicule (1) non guidé à traction électrique, comprenant une unité de stockage (2) d'énergie électrique rechargeable, au moins un patin collecteur de polarité positive (P+), au moins un patin collecteur de polarité négative (P-), et un patin collecteur (Pt) relié à la masse dudit véhicule (1), lesdits patins collecteurs (P+, P-, Pt) étant déplaçables entre une position relevée et une position abaissée en contact avec des éléments conducteurs (R+, R-, Rt) correspondants d'une station de recharge (SR) au sol fournissant une tension et un courant de recharge continus, lesdits patins collecteurs (P+, P-, Pt) étant reliés à l'unité de stockage (2) et lesdits éléments conducteurs (R+, R-, Rt) étant reliés à la station de recharge (SR) au sol, ledit système de recharge comprenant une unité électronique au sol (3) et une unité électronique embarquée (4) sur le véhicule (1) pilotant les opérations de recharge à l'arrêt, **caractérisé en ce que** les éléments conducteurs (R+, R-, Rt) sont disposés sur une voie routière de circulation ou de stationnement et comprennent un élément conducteur de polarité positive (R+), un élément conducteur de polarité négative (R-) et un élément conducteur relié à la terre (Rt) destiné à venir en contact avec un des patin collecteur (Pt) relié à la masse du véhicule (1).

4. Système de recharge d'un véhicule (1) non guidé à traction électrique, comprenant une unité de stockage (2) d'énergie électrique rechargeable, ladite unité de stockage (2) étant isolée électriquement par rapport à son boîtier et par rapport au châssis du véhicule (1), au moins un patin collecteur de polarité positive (P+) et au moins un patin collecteur de polarité négative (P-), lesdits patins collecteurs (P+, P-) étant déplaçables entre une position relevée et une position abaissée en contact avec des éléments conducteurs (R+, R-) correspondants d'une station de recharge (SR) au sol fournissant une tension et un courant de recharge continus, lesdits patins collecteurs (P+, P-) étant reliés à l'unité de stockage (2) et lesdits éléments conducteurs (R+, R-) étant reliés à la station de recharge (SR) au sol, ledit système de recharge comprenant une unité électronique au sol (3) et une unité électronique embarquée (4) sur le véhicule (1) et isolée électriquement par rapport au châssis dudit véhicule (1), les unités électroniques embarquée (4) et au sol (3) pilotant les opérations de recharge à l'arrêt, **caractérisé en ce que** les éléments conducteurs (R+, R-) sont disposés sur une voie routière de circulation ou de stationnement et comprennent un élément conducteur de polarité positive (R+) et un élément conducteur de polarité négative (R-).

5. Système de recharge selon la revendication 3 ou 4, **caractérisé en ce qu'**il comprend un élément conducteur complémentaire (Rcom) et un patin collecteur complémentaire (Pcom) déplaçable entre une position relevée et une position abaissée en contact avec l'élément conducteur complémentaire (Rcom), ledit patin collecteur (Pcom) étant relié à l'unité électronique embarquée (4) et ledit élément conducteur (Rcom) étant relié à l'unité électronique au sol (3), de manière à établir une ligne de communication entre le véhicule (1) et la station de recharge (SR).

6. Système de rechargement selon la revendication 1, 3 ou 4, **caractérisé en ce qu'**il comprend un système de communication non filaire pour transmettre des informations et/ou des consignes entre le véhicule (1) et la station de recharge (SR).

7. Procédé de contrôle pour la mise en sécurité d'un système de recharge conforme à l'une quelconque des revendications 1 à 6, comprenant les étapes :
a) positionner le véhicule (1) et les patins collecteurs (P+, P-, Pt) au-dessus des éléments conducteurs (R+, R-, Rt),
b) abaisser les patins collecteurs (P+, P-, Pt) pour réaliser un contact avec les éléments conducteurs (R+, R-, Rt) de même polarité, lesdits patins collecteurs (P+, P-, Pt) hors tension et lesdits éléments conducteurs (R+, R-, Rt) étant hors tension, en court-circuit et reliés à la terre,
c) utiliser l'unité électronique embarquée (4) et l'unité électronique au sol (3) pour réaliser un circuit électrique dont la fermeture, concomitante à l'abaissement des patins collecteurs (P+, P-, Pt) et à l'établissement du contact avec les éléments conducteurs (R+, R-, Rt), génère la circulation d'un courant électrique sous une tension faible, grâce à un générateur de tension (Eg) de l'unité électronique au sol (3) et grâce à un générateur de tension (Emr) de l'unité électronique embarquée (4),
d1) utiliser la circulation de ce courant électrique pour charger un condensateur (Cmr) de l'unité électronique embarquée (4) et deux condensateurs (Cg1, Cg2) de l'unité électronique au sol (3),
e1a) grâce à l'unité électronique embarquée (4), on mesure la tension électrique Umr aux bornes du condensateur Cmr et on compare son évolution à un abaque enregistré pendant un temps t1,
e1b) simultanément, grâce à l'unité électronique au sol (3), on mesure les tensions électriques Ug1 et Ug2 aux bornes des condensateurs (Cg1) et (Cg2) et on compare leurs évolutions à un abaque enregistré pendant le temps t1,
e1c) en cas de correspondance au bout du temps t1, l'unité électronique embarquée (4) interrompt la circulation du courant sous c),
e1d) en cas de correspondance au bout du temps t1, mais après un délai t2 complémentaire, l'unité électronique au sol (3) interrompt la liaison avec la terre et le court-circuit sous b),
e1e) après un délai t3, d'une durée supérieure à t2, initié par l'interruption sous e1b), l'unité électronique embarquée (4) relie les patins collecteurs (P+, P-) au BUS continu (+HV/-HV) du véhicule (1), lesdites mesures des tensions électriques Ug1 et Ug2, permettant à l'unité électronique au sol (3) d'identifier les éléments conducteurs (R+, R-) aux dessus desquels se trouvent les patins collecteurs (P+, P-).

8. Procédé de contrôle pour la mise en sécurité d'un système de recharge conforme à l'une quelconque des revendications 1 à 6, comprenant les étapes :
a) positionner le véhicule (1) et les patins collecteurs (P+, P-, Pt) au-dessus des éléments conducteurs (R+, R-, Rt),
b) abaisser les patins collecteurs (P+, P-, Pt) pour réaliser un contact avec les éléments conducteurs (R+, R-, Rt) de même polarité, lesdits patins collecteurs (P+, P-, Pt) hors tension et lesdits éléments conducteurs (R+, R-, Rt) étant hors tension, en court-circuit et reliés à la terre,
c) utiliser l'unité électronique embarquée (4) et l'unité électronique au sol (3) pour réaliser un circuit électrique dont la fermeture, concomitante à l'abaissement des patins collecteurs (P+, P-, Pt) et à l'établissement du contact avec les éléments conducteurs (R+, R-, Rt), génère la circulation d'un courant électrique sous une tension faible, grâce à un générateur de tension (Eg) de l'unité électronique au sol (3) et grâce à un générateur de tension (Emr) de l'unité électronique embarquée (4),
d2) on utilise la circulation de ce courant électrique pour charger un condensateur (Cmr) de l'unité électronique embarquée (4), ladite circulation de courant étant interrompue si le patin collecteur (P+) n'est pas en contact avec l'élément conducteur (R+) ou si le patin collecteur (P-) n'est pas en contact avec l'élément conducteur (R-),
e2a) grâce à l'unité électronique embarquée (4), on mesure la tension électrique Umr aux bornes du condensateur (Cmr) et on compare son évolution à un abaque enregistré pendant un temps t1 et en cas de correspondance au bout de ce temps t1, l'unité électronique embarquée (4) interrompt la circulation du courant sous c), e2b) puis l'unité électronique embarquée (4) demande à l'unité électronique au sol (3) d'interrompre la liaison avec la terre et le court-circuit sous b),
e2c) lorsque l'unité électronique au sol (3) a acquitté e2b), elle relie les patins collecteurs (P+) et (P-) au BUS continu (+HV/-HV) du véhicule (1).

9. Procédé de contrôle pour la mise en sécurité d'un système de recharge conforme à l'une quelconque des revendications 1 à 6, comprenant les étapes :
a) positionner le véhicule (1) et les patins collecteurs (P+, P-, Pt) au-dessus des éléments conducteurs (R+, R-, Rt),
b) abaisser les patins collecteurs (P+, P-, Pt) pour réaliser un contact avec les éléments conducteurs (R+, R-, Rt) de même polarité, lesdits patins collecteurs (P+, P-, Pt) hors tension et lesdits éléments conducteurs (R+, R-, Rt) étant hors tension, en court-circuit et reliés à la terre,
c) utiliser l'unité électronique embarquée (4) et l'unité électronique au sol (3) pour réaliser un circuit électrique dont la fermeture, concomitante à l'abaissement des patins collecteurs (P+, P-, Pt) et à l'établissement du contact avec les éléments conducteurs (R+, R-, Rt), génère la circulation d'un courant électrique sous une tension faible, grâce à un générateur de tension (Eg) de l'unité électronique au sol (3) et grâce à un générateur de tension (Emr) de l'unité électronique embarquée (4),
d3) on utilise la circulation de ce courant électrique pour charger des condensateurs (Cg1) et (Cg2) de l'unité électronique au sol (3), ladite circulation de courant étant interrompue si le patin collecteur (P+) n'est pas en contact avec l'élément conducteur (R+) ou si le patin collecteur (P-) n'est pas en contact avec l'élément conducteur (R-),
e3a) grâce à l'unité électronique au sol (3), on mesure les tensions électriques Ug1 et Ug2 aux bornes des condensateurs (Cg1) et (Cg2) et on compare leurs évolutions à un abaque enregistré pendant un temps t1 et en cas de correspondance de l'une des évolutions mesurées au bout de ce temps t1, l'unité électronique au sol (3) demande à l'unité électronique embarquée (4) d'interrompre la circulation du courant sous c),
e3b) puis l'unité électronique embarquée (4) demande à l'unité électronique au sol (3) d'interrompre la liaison avec la terre et le court-circuit sous b),
e3c) lorsque l'unité électronique au sol (3) a acquitté e3b), l'unité électronique embarquée (4) relie les patins collecteurs (P+) et (P-) au BUS continu (+HV/-HV) du véhicule (1).

10. Procédé de contrôle selon la revendication 7, 8 ou 9 **caractérisé en ce qu'**il comprend les étapes:
- f1a) l'unité électronique au sol (3) mesure au niveau des éléments conducteurs (R+, R-), grâce à des capteurs de tension électrique, les tensions électriques Ur1 et Ur2 dont au moins une correspond à une tension électrique du BUS continu (+HV/-HV) du véhicule (1) et transmet cette tension électrique du BUS continu (+HV/-HV) comme tension électrique de consigne à la station de recharge (SR),
- f1b) l'unité électronique au sol (3) mesure simultanément, grâce à un capteur de tension électrique, la tension électrique Ur3 délivrée par la station de recharge (SR) et lorsque la tension délivrée par la station de recharge (SR) est proche de la tension du BUS continu (+HV/-HV) du véhicule (1), l'unité électronique au sol (3) commande l'alimentation des éléments conducteurs (R+, R-).

11. Procédé de contrôle selon l'une quelconque des revendications 7 à 10, **caractérisé en ce qu'**il comprend une transmission d'informations entre de l'unité électronique embraquée (4) laquelle contrôle l'unité de stockage (2) et l'unité électronique au sol (3).

12. Procédé de contrôle selon la revendication 11, **caractérisé en ce qu'**il comprend une transmission non filaire via WIFI ou filaire d'informations du genre une consigne d'intensité de courant de recharge.
